# EUROPÄISCHE PATENTSCHRIFT

(11) **EP 3 272 968 B1**
(45) Veröffentlichungstag und Bekanntmachung des Hinweises auf die Patenterteilung: **26.09.2018**
(21) Anmeldenummer: 17169984.6
(22) Anmeldetag: 08.05.2017
(51) Int. Cl.: E04G 23/00, B08B 1/00, B08B 1/04, E04D 15/00

(54) **REINIGUNGSVORRICHTUNG FÜR TERRASSENÜBERDACHUNGEN AN EINEM GEBÄUDE**
CLEANING DEVICE FOR TERRACE ROOFS ON A BUILDING
DISPOSITIF DE NETTOYAGE POUR REVÊTEMENTS DE TOIT DE TERRASSE SUR UN BÂTIMENT

(30) Priorität: 18.07.2016 DE 202016103889 U
(43) Veröffentlichungstag der Anmeldung: 24.01.2018
(73) Patentinhaber: Doejen, Albert, 48531 Nordhorn (DE)
(72) Erfinder: Doejen, Albert, 48531 Nordhorn (DE)
(74) Vertreter: Weeg, Thomas

(56) Entgegenhaltungen:
- WO-A1-2009/025515
- WO-A1-2015/132816
- FR-A- 1 535 879
- JP-A- 2004 186 632

## Beschreibung

Die vorliegende Erfindung bezieht sich auf eine Reinigungsvorrichtung für eine Terrassenüberdachung nach den im Oberbegriff des Anspruchs 1 genannten Merkmalen.

Wenn in dieser Beschreibung vereinfachend nur von Glasflächen, die eine Ausgestaltung einer Überdachungsfläche darstellen, die Rede ist, so erfasst dieser Begriff nicht nur Überdachungsflächen aus dem Werkstoff Glas. Es geht dabei auch um transparente, transluzente oder auch lichtundurchlässige Flächen einer Terrassenüberdachung, die verschmutzt sind und gereinigt werden müssen. Neben Glas können die Flächen auch aus einem Kunststoffmaterial hergestellt sein, es kann sich um plane, unebene oder gewellte Flächen handeln, und es kann sich um einlagiges oder mehrlagiges Material handeln, wie beispielsweise Doppelstegplatten. Derartige Glasflächen finden sich insbesondere bei Terrassenüberdachungen, aber auch bei Wintergärten und dergleichen.

Aus der Schrift DE 198 47 239 ist eine Reinigungsvorrichtung bekannt. An dem Reinigungsschlitten sind Reinigungsdüsen angebracht, aus denen Wasser auf die Glasfläche gesprüht wird, während der Reinigungsschlitten über die Glasfläche bewegt wird. Dabei kann an der Glasfläche anhaftender Schmutz weggespült werden. Eine ähnliche Vorrichtung ist aus der Schrift DE 10 2008 022 270 bekannt. Entsprechende Glasflächen sind beispielsweise bei Wintergärten, Terrassenüberdachungen oder Gebäuden mit verglasten Dachabschnitten bekannt. Solche Glasflächen verschmutzen schnell und sind unansehnlich, können aber nur mit erheblichem Aufwand gereinigt werden.

Da die Flüssigreinigung nicht alle Schmutzreste rückstandsfrei ablöst, sind auch Vorrichtungen vorgeschlagen worden, bei denen der Reinigungsschlitten feststehende Bürsten oder eine Gummilippe über die Glasfläche führt. Beispiele hierfür finden sich in den Schriften DE 20 2013 004 614 und DE 20 2007 006 874. Auch diese Vorrichtungen sind nicht dazu geeignet, alle Schmutzanhaftungen rückstandsfrei zu entfernen.
Eine Vorrichtung zur Reinigung von Solarpaneelen, die im Übrigen gattungsgemäß ist, findet sich in der Schrift WO 2015/132816 A1. WO 2015/132816 A1 offenbart die Merkmale des Oberbegriffs des Anspruchs 1. Der Reinigungsschlitten der Reinigungsvorrichtung ist motorisch verfahrbar, und auch die Bürste ist motorisch angetrieben. Allerdings fehlen Führungen für den Reinigungsschlitten, die ein Verkanten des Reinigungsschlittens während der Reinigungszyklen und eine daraus resultierende Schiefstellung vermeiden können. Wenn sich der Reinigungsschlitten verkantet, muss dieser erst wieder gerade gestellt werden, bevor er seine Reinigungstätigkeit wieder aufnehmen kann. Daraus resultiert ein hoher Wartungsaufwand, und je nach Verfügbarkeit des Wartungspersonals können sich auch unerwünschte Stillstandszeiten der Reinigungsvorrichtung ergeben. Aus der Schrift WO 2009/025515 ist ein vergleichbarer Reinigungsschlitten bekannt.
Es ist die Aufgabe der vorliegenden Erfindung, eine Vorrichtung zu schaffen, die ein verbessertes Reinigungsergebnis mit einem Reinigungsschlitten ermöglicht, der dauerhaft betrieben werden kann, ohne dass sich der Reinigungsschlitten nach längerem Gebrauch verkantet.
Die Aufgabe wird durch eine gattungsgemäße Reinigungsvorrichtung mit den kennzeichnenden Merkmalen des Anspruchs 1 gelöst.
Zur Befeuchtung der Glasfläche reicht es aus, die Bewässerungsvorrichtung an einem oberen Ende der Glasfläche anzuordnen. Das Wasser, das aus der Bewässerungsvorrichtung austritt, fließt dann schwerkraftbedingt über die Glasfläche ab und benetzt diese dabei. Dabei kann auf der Glasfläche anhaftender Schmutz, wie beispielsweise Vogelkot, Pollen, Baumsäfte und dergleichen, bereits von dem Wasser angelöst werden. Das über die Bewässerungsvorrichtung austretende Wasser kann mit geeigneten Reinigungszusätzen versehen sein. Es kann im Zufluss der Bewässerungsvorrichtung auch eine Entmineralisierungsanlage angeordnet sein, um Kalkränder, die nach dem Abtrocknen des Wassers auf der Glasfläche zurück bleiben, möglichst zu vermeiden oder zumindest unauffällig gering zu halten. Die Bewässerungsvorrichtung kann schlauch- oder rohrartig ausgebildet sein und weist über ihre Länge verteilt eine Anzahl von Austrittsöffnungen auf, die so verteilt sind, dass die Glasfläche von dem aus den Austrittsöffnungen austretenden Wasser möglichst vollflächig benetzt wird. Die Austrittsöffnungen können in Düsenform ausgebildet sein, wodurch sich das austretende Wasser vernebelt und sich in kleinen Tröpfchen auf die Glasfläche legt. Die Austrittsöffnungen können auch mit verstellbaren Düsen versehen sein, die wahlweise eine feine Vernebelung oder einen scharfen Wasserstrahl zulassen, um die Austrittsform des Wassers an den jeweiligen Reinigungsbedarf anpassen zu können.

Die rotierende Bürste kommt vorteilhaft zum Einsatz, nachdem die Glasfläche bereits mit Wasser befeuchtet ist. Die Borsten der rotierenden Bürste reiben auf der Glasfläche anhaftende Schmutzpartikel durch mechanische Einwirkung ab. Je nach Härte, Material, Besatzdichte und Länge der Borsten, eine geeignete Bürstendrehzahl sowie durch einen geeigneten Abstand der Bürste von der Glasfläche kann die Reinigungsaggressivität der Borsten auf einen gewünschten Wert eingestellt werden. Ein Begehen der Dachfläche oder eine mechanische Bearbeitung mit Bürsten oder Wischern von der Seite her ist nicht mehr erforderlich, um gute Reinigungsergebnisse zu erzielen. Es genügen ein oder mehrere Reinigungsläufe der Reinigungsvorrichtung.

Um von den Schmutzpartikeln verursachte Kratzer in der Glasfläche zu vermeiden, kann es vorteilhaft sein, möglichst viele Schmutzpartikel zunächst nur mit dem Wasser abzuspülen und erst später die verbleibenden Reste mit der Bürste zu entfernen. Die bereits mit dem über die Glasfläche laufenden Wasser abgeflossenen Schmutzpartikel können in der Glasfläche im Zusammenwirken mit den rotierenden Borsten keine Kratzer mehr verursachen, wenn die Bürste erst später kommt. Wenn der Schmutz durch das Wasser bereits angelöst ist, können die an der Glasfläche anhaftenden Schmutzpartikel auch von den Borsten leichter abgelöst und abgefördert werden, auch dadurch kann das durch Schmutzpartikeln verursachte Risiko von Kratzern im Glas vermindert werden.

Auf den Reinigungsschlitten der Reinigungsvorrichtung können nur eine einzige, aber auch mehrere rotierend antreibbare Bürsten aufgebaut sein. Bei mehreren Bürsten können die jeweils installierten Borsten in ihrem Reinigungsgrad aufeinander abgestimmt sein, beispielsweise eine erste schärfere Bürste und eine zweite, feinere Bürste, um ein besseres Reinigungsergebnis zu erzielen. Die zweite Bürste kann beispielsweise auch einen Moosgummibesatz und/oder Gummilippen aufweisen, um eine Tropfenbildung auf der Glasfläche zu vermeiden. Die zweite Bürste kann zur ersten Bürste zuschaltbar oder alternativ betreibbar sein, beispielsweise, nachdem die Bewässerungsvorrichtung abgestellt worden ist. Die zweite Bürste kann auch nur als eine nicht angetriebene, von der Abrollbewegung auf der Glasfläche angetriebene Bürste ausgebildet sein, oder anstelle einer zweiten Bürste ist eine starr am Reinigungsschlitten mitgeführte Abziehleiste vorhanden. Entsprechendes gilt, wenn mehr als zwei Bürsten vorgesehen sind.

Durch die stationär am Einbauort verbleibende Bewässerungsvorrichtung werden der Antrieb und die Führung des Reinigungsschlittens und der Bürste vereinfacht. Es kann darauf verzichtet werden, Schläuche zu installieren, die bei einer Fahrbewegung des Reinigungsschlittens den Wassernachschub nachführen. Optisch bleibt die Reinigungsvorrichtung kompakt, weil keine nachzuführenden Wasserschläuche sichtbar sind oder in Schlauchtrommeln versteckt vorgehalten werden. Der Reinigungsschlitten führt nur die rotierend antreibbare Bürste mit sich, die optisch nicht besonders auffällig ist und deren Antriebe in kompakten Gehäusen untergebracht werden können.
Natürlich ist es bei einer entsprechend ausgelegten Steuerung und Bedienschaltung möglich, die Bewässerungsvorrichtung und die Bürste auch unabhängig voneinander zu betreiben. Wenn das Reinigungsergebnis genügt, das in einem konkreten Einsatzfall nur mit dem Einsatz der Bewässerungsvorrichtung erzielbar ist, muss nicht zwangsläufig auch die Bürste bei der Reinigung eingesetzt werden. Andersherum ist es auch nicht erforderlich, die Bewässerungsvorrichtung einzuschalten, wenn ein zufrieden stellendes Reinigungsergebnis auch schon trocken nur mit dem Einsatz der Bürste erzielbar ist. Entsprechende Schaltungen des Antriebs können in der Bedienelektronik vorgesehen sein.
Die Bürste ist auf einer Welle angebracht, auf die zwei drehfest mit der Welle verbundene erste Zahnräder aufgesetzt sind, die die Rotationsbewegung der Welle antreiben und von denen eines mit einem von einem Motor verbundenen Antriebsritzel antriebsverbunden ist, und das Antriebsritzel zum Verfahren des Reinigungsschlittens ist mit einem zweiten Zahnrad antriebsverbunden, das drehfest auf einer Antriebswelle montiert ist, die die Drehbewegung auf ein ebenfalls mit der Antriebswelle drehfest verbundene Zahnriemenscheibe überträgt, deren Zahnkulisse mit den Zähnen eines entlang des Verfahrweges vorgehaltenen Zahnriemens kämmt.

Ein weiteres Ausführungsbeispiel offenbart zwei Zahnriemenscheiben, wobei diese Zahnriemenscheiben die Antriebsräder sind, über deren Drehung sich die Reinigungsvorrichtung über die Terrassenüberdachung bewegt. Bei zwei Zahnriemen, je einem in einem seitlichen Endbereich der Reinigungsvorrichtung, ergibt sich ein Gleichlauf der Reinigungsvorrichtung über ihre Breite. Durch den Formschluss der Zähne der Zahnriemenscheiben mit den Zähnen der Zahnriemen sind dann keine Laufwegdifferenzen zwischen der rechten und linken Seite der Reinigungsvorrichtung mehr möglich. Eventuelle selbst nur geringe Schlupf- oder Drehzahlunterschiede auf gegenüberliegenden Seiten des Reinigungsschlittens können sich dadurch nicht über die Nutzungszeit der Reinigungsvorrichtung zu Schiefstellungen des Reinigungsschlittens in den Führungsschienen aufaddieren. Durch die Zwangsführung über die Zahnriemen und die damit kämmenden Zahnriemenscheiben wird eine Schiefstellung des Reinigungsschlittens vermieden.

Nach einer weiteren Ausgestaltung der Erfindung ist die Bürste in die Richtung rotierend angetrieben, in die sich die Glasfläche absenkt. Bei der Hinfahrt befördert die Bürste Wasser und abgelösten Schmutz unterschlächtig fördernd auf das Ende der Glasfläche zu. Bei der Rückfahrt schiebt die Bürste bei unveränderter Rotationsrichtung das Wasser nach oben hin auf, so dass es nicht so schnell nach unten abläuft. Die Bürste erhöht dadurch die im Kontaktbereich der Bürste zur Glasfläche anstehende Wassermenge und benutzt dabei die im Wasser schwebenden abgelösten Schmutzpartikel, die ebenfalls nicht so schnell ablaufen, als eine Art abrasiv wirkendes Schleifmittel, um damit die Reinigungswirkung der Bürste zu erhöhen. Im Bereich, in dem die Borsten die Glasfläche berühren, ergibt sich ein mächtigerer Wasserfilm, dessen Spülwirkung und Schmutzaufnahme durch die rotatorische Bewegung der Borsten in diesem Bereich erhöht ist.

Nach einer weiteren Ausgestaltung der Erfindung ist die Bürste auf ihrer Oberseite von einem Abdeckblech abgedeckt. Das Abdeckblech verhindert, dass bei einer Rotation der Bürste noch an der Bürste anhaftende Schmutzpartikel nach hinten entgegen der Abfließrichtung des Wassers geworfen werden. Bei Nichtgebrauch der Reinigungsvorrichtung wird eine unerwünschte Verschmutzung und Befeuchtung der Bürste vermieden. Dem Abdeckblech kann eine Abstreifleiste zugeordnet sein, die die Borstenenden kontaktiert und die durch die Streifbewegung der Borsten am Abdeckblech vorbei an diesen eventuell noch anhaftenden Schmutz abstreift. Das Glasdachbefestigungsprofil am Ende der Dachfläche seitlich kann durch die Führungsschiene ersetzt werden. Dadurch brauchen keine neuen Befestigungen und Bohrungen angebracht werden.

Nach einer weiteren Ausgestaltung der Erfindung ist der Reinigungsschlitten in zumindest zwei Führungsschienen geführt, die sich auf den seitlichen Enden der Glasfläche befinden. Die Schienenführung erstreckt über die Länge des Verfahrweges der Reinigungsvorrichtung und hält diese nahe an der Oberfläche der Terrassenüberdachung. Die Führungsschienen bilden auf diese Weise auch eine Abhebesicherung, insbesondere, wenn gesonderte Abhebesicherungen an der Reinigungsvorrichtung ausgebildet sind, die eine Abhebebewegung gegenüber den Führungsschienen formschlüssig sperren. Durch die Schienenführung wird auch bei einem einseitigen Antrieb der Welle ein Gleichlauf des Reinigungsschlittens auf beiden Seiten der Terrassenüberdachung in Querrichtung gewährleistet. Wenn die Terrassenüberdachung seitlich an Gebäudeteile anstößt, wird die Führungsschiene anders ausgebildet und der Antrieb läuft am Ende der Überdachung auf der Oberseite der Dachfläche.

Nach einer weiteren Ausgestaltung der Erfindung ist der Umschlingungsgrad der beiden Zahnriemenscheiben mit den jeweiligen Zahnriemen durch ein oder zwei Laufrollen bestimmt, die so angeordnet sind, dass sie auf der der Zahnkulisse abgewandten Seite des Zahnriemens laufen. Durch diese Anordnung laufen die Zahnriemen also durch einen Spalt zwischen dem Außenumfang der Zahnriemenscheibe und der einen und gegebenenfalls auch zweiten Laufrolle hindurch. Wenn die eine oder die beiden Laufrollen fest mit dem beweglichen Reinigungsschlitten verbunden sind, ergibt sich immer eine definierte Lage der einen oder beiden Laufrollen im Verhältnis zur Zahnriemenscheibe. Die Laufrollen sollten so angeordnet sein, dass mehrere Zähne des Zahnriemens während des Umlaufs um die Zahnriemenscheibe in den Eingriff mit den Zähnen der Zahnriemenscheibe gezwungen sind, so dass sich ein größerer Umschlingungswinkel des Zahnriemens um die Zahnriemenscheibe ergibt. Dadurch wird das Risiko des Übersetzens der Zähne des Zahnriemens über die Zähne der Zahnriemenscheibe vermindert. Die Laufrollen bilden auf diese Weise eine Sicherung, dass der Zahnriemen sich nicht von der Zahnriemenscheibe abheben kann. Auch der Reinigungsschlitten wird auf diese Weise besser gegen ungewollte Bewegungen abgesichert.

Nach einer weiteren Ausgestaltung der Erfindung ist der Reinigungsschlitten von einem Elektromotor angetrieben, dessen Drehbewegung gleichzeitig über Getrieberadstufen den Reinigungsschlitten und die Bürste antreibt. Durch den nur einen Elektromotor bleibt der Antrieb der Reinigungsvorrichtung insgesamt kostengünstig. Die Getrieberadstufen ermöglichen eine Über- oder Untersetzung der Drehzahl der Abtriebswelle des Elektromotors auf Drehzahlen des Antriebsrades für den Reinigungsschlitten und der Bürste, die einer sachgerechten Funktion angemessen sind. So kann beispielsweise über einen Getriebemotor mit einem Planetengetriebe das Drehzahlverhältnis vom Antriebsrad des Reinigungsschlittens zur Bürste auf ein Verhältnis von 1 : 15 eingestellt sein. Bei einer Länge der zu reinigenden Glasfläche von 4,50 m kann sich daraus für einen Reinigungsdurchlauf (hin und zurück) eine Fahrzeit von beispielsweise 4 min. ergeben. Der Elektromotor kann auf einer Seite der Glasfläche angeordnet sein, an der er optisch weniger auffällt. Auf der anderen Seite der Glasfläche bleibt die Reinigungsvorrichtung dadurch unauffällig und kaum sichtbar. Eine Übersetzungsstufe zwischen den Antriebsrädern des Reinigungsschlittens und der Bürste kann auf beiden Seiten der Glasfläche vorhanden sein.

Nach einer weiteren Ausgestaltung der Erfindung ist die Länge des Verfahrweges des Reinigungsschlittens über die Steuerung des Elektromotors einstellbar und/oder zumindest am unteren Ende des Verfahrweges des Reinigungsschlittens ein Anschlag mit einem Schalter vorhanden, mit dem der Antrieb für den Reinigungsschlitten und/oder die Bürste abschaltbar und/oder umschaltbar sind. Wenn die Länge des Verfahrweges voreingestellt ist, kann auf einen elektrischen oder mechanischen Anschlag verzichtet werden, um den Reinigungsschlitten beim Erreichen des Endes der Reinigungsstrecke abzustoppen und in die entgegengesetzte Richtung zurücklaufen zu lassen. Dies kann von der Steuerung automatisch ausgelöst werden, wenn der Reinigungsschlitten die voreingestellte Länge des Verfahrweges erreicht hat. Erreicht der Reinigungsschlitten das untere Ende des Verfahrweges, kann der Antrieb für den Reinigungsschlitten auch mechanisch oder elektrisch von einem am Verfahrweg angeordneten Schalter abgeschaltet werden, oder der Antrieb wird von einem mechanischen oder elektrischen am Verfahrweg angeordneten Schalter umgeschaltet, damit sich der Reinigungsschlitten automatisch wieder in seine Ausgangsposition zurückbewegt. Der Antrieb für die Bürste wir ebenfalls vorteilhaft aus- oder umgeschaltet, um zu vermeiden, dass die Bürste weiterläuft, ohne dabei eine Glasfläche zu reinigen, oder sich in die falsche Richtung dreht, bei der kein optimales Reinigungsergebnis erzielt wird. Bei einer Rücklaufbewegung des Reinigungsschlittens kann eine Rotationsbewegung der Bürste nachteilig sein, wenn dabei noch auf der Glasfläche befindlicher Restschmutz verteilt und wieder nach oben befördert wird. Um Schlieren auf der soeben gereinigten Glasfläche zu vermeiden, kann der Schalter auch eine Hubvorrichtung aktivieren, mit der die Bürste so weit anhebbar ist, das diese bei einer Rücklaufbewegung der Bürste nicht mehr die Glasfläche berührt. Ein mechanischer oder elektrischer Anschlag am oberen Ende des Verfahrweges kann mit einem Schalter den Antrieb für den Reinigungsschlitten endabschalten oder erneut umschalten, und die Hubvorrichtung für die Bürste wieder absenken und die Bürste abschalten, oder dies erfolgt bei einem voreingestellten Verfahrweg über die Steuerung des Elektromotors. Die Ein- und Ausschaltung oder Umschaltung der Antriebe kann beispielsweise über elektrisch betätigte Kupplungen erfolgen. Mehrfachläufe der Reinigungsvorrichtung können über eine Fernsteuerung, eine Bedientastatur oder einen einfachen Ein-Ausschalter gesteuert werden.

Nach einer weiteren Ausgestaltung der Erfindung ist an die Steuerung des Elektromotors oder den Schalter ein schaltbares Ventil wie beispielsweise ein Magnetventil angeschlossen, mit dem die Wasserzufuhr der Bewässerungsvorrichtung zu öffnen und/oder zu schließen ist. Durch das schaltbare Ventil wird verhindert, dass die Bewässerungsvorrichtung noch Wasser zugeführt bekommt, sofern dieses nicht für Reinigungsläufe erforderlich ist. Der Wasserzulauf wird auf diese Weise auf Zeiten beschränkt, in denen das Wasser tatsächlich für den Reinigungsbetrieb benötigt wird. Bei Undichtigkeiten in den Zuführleitungen oder bei Frost im Winter werden unerwünschte Wasserverluste oder Schäden an den Zuführleitungen verhindert.

Nach einer weiteren Ausgestaltung der Erfindung weist die stationär an einem oberen Ende der Glasfläche angeordnete Bewässerungsvorrichtung über ihre Arbeitsbreite hinweg unterschiedliche Durchmesser im Rohrdurchmesser auf. Wenn die Glasfläche beispielsweise eine Breite von 4,50 m oder 6 m aufweist und das Wasser an einem Ende der Bewässerungsvorrichtung zuströmt, ergibt sich über die Anzahl der entlang der Arbeitsbreite vorhandenen Austrittsöffnungen zum anderen Ende der Bewässerungsvorrichtung hin ein Druckverlust, der durch kleiner werdende Rohrdurchmesser zumindest teilweise aufgefangen werden kann, so dass sich annähernd gleiche Mengen an Wasser ergeben, die aus den Austrittsöffnungen austreten. Als Rohrdurchmesser kommen beispielsweise in einem zuströmseitigen Abschnitt der Bewässerungsvorrichtung 20 mm, in einem mittleren Bereich 15 mm und in einem endseitigen Bereich 12 mm in Betracht.

Nach einer weiteren Ausgestaltung der Erfindung ist an der Gebäudewand eine Kabeltrommel zum Aufwickeln des Stromkabels für den Elektromotor angeordnet, die einen Rückholfederantrieb aufweist. Zur Stromversorgung des Elektromotors kann ein einfaches Kabel verwendet werden, das in einer nicht maximalen Ausfahrstellung des Reinigungsschlittens nicht sichtbar durchhängt, sondern mit der nicht benötigen Länge in der Kabeltrommel verborgen bleibt. Die Rückholfeder stellt einen robusten und zuverlässigen Aufwickelantrieb dar, der kostengünstig und wartungsfrei ist.

Nach einer weiteren Ausgestaltung der Erfindung weist die Reinigungsvorrichtung eine elektrische Steuerung auf, die in einem Gehäuse angeordnet ist, wobei in dem Gehäuse eine elektrisch aufheizbare Heizvorrichtung angeordnet ist. Da die Reinigungsvorrichtung im Außenbereich eines Gebäudes installiert wird, ist die elektrische Steuerung erheblichen thermischen Schwankungen und wechselnder Feuchtigkeit ausgesetzt. Daraus ergeben sich auch Korrosionsrisiken an elektrischen Kontakten. Um Funktionsrisiken durch Feuchtigkeit in der elektrischen Steuerung zu verringern, wird vorgeschlagen, im Gehäuse eine Heizvorrichtung wie beispielsweise einen Heizstab vorzusehen, mit dem eindringende Feuchtigkeit und Kondenswasser über eine entsprechende Belüftung des Gehäuses beseitigt werden kann.

Nach einer weiteren Ausgestaltung der Erfindung weist die Bürste im Bereich von sich in Arbeitsrichtung der Reinigungsvorrichtung erstreckenden Trägerprofilen, die über die umgebende Glasfläche überstehen, einen verringerten Außenumfang auf. Durch den verringerten Außenumfang der Bürste berühren auch die Borsten, die auf der Oberfläche der Trägerprofile rotieren, die Trägerprofile mit einem vergleichbaren Anpressdruck wie die Borsten, die über die benachbarten Glasflächen streifen. Dadurch wird vermieden, dass im Bereich der Trägerprofile rotierende Borsten die benachbarten Borsten, die auf der Glasfläche rotieren, seitlich verdrängen und es zu einem über die Breite ungleichmäßigen Reinigungsergebnis kommt.

Nach einer weiteren Ausgestaltung der Erfindung sind auf der Welle ein oder mehrere Zwischenrollen angeordnet, mit denen die Welle über ihre Breite auf der Terrassenüberdachung abgestützt ist. Über die Zwischenrollen als Stützräder kann ein Durchhängen der Welle bei größeren Arbeitsbreiten vermieden werden, die Borsten der Bürste behalten dadurch über die gesamte Arbeitsbreite hinweg einen gleichen oder nahezu gleichen Anpressdruck auf der Oberfläche der Terrassenüberdachung. Die Welle der Reinigungsvorrichtung kann so beispielsweise alle 1, 2 oder 3 m Arbeitsbreite durch eine Zwischenrolle abgestützt sein. Eine Zwischenrolle kann insbesondere dort vorgesehen sein, wo sich ein Tragprofil der Terrassenüberdachung befindet, das sich in die Richtung des Verfahrweges der Reinigungsvorrichtung erstreckt. Die Zwischenrolle kann dann auf der Oberseite des Tragprofils rollen, so dass sich keine Laufspuren der Tragrolle in der Oberfläche der transparenten oder transluzenten Teile der Terrassenüberdachung ergeben. Zusätzlich kann eine Zugentlastung bei größeren Arbeitsbreiten erforderlich sein. So kann eine Zugentlastung dort angebracht sein, wo eine Zwischenrolle erforderlich ist.

Nach einer weiteren Ausgestaltung der Erfindung ist der Motor in einer Position angeordnet, die innerhalb der Breite des Reinigungsschlittens liegt. Eine solche Anordnung empfiehlt sich, wenn die Reinigungsvorrichtung in beengte Raumverhältnisse eingebaut werden soll, in der seitlich neben der Reinigungsvorrichtung kein weiterer Bauraum zur Verfügung steht.
Es wird ausdrücklich darauf hingewiesen, dass die vorstehend beschriebenen Ausgestaltungen der Erfindung jeweils für sich, aber auch in einer beliebigen Kombination, gemäß den Ansprüchen, miteinander mit dem Gegenstand des Hauptanspruches kombinierbar sind.
Weitere Abwandlungen und Ausgestaltungen der Erfindung lassen sich der nachfolgenden gegenständlichen Beschreibung und den Zeichnungen entnehmen.
Die Erfindung soll nun anhand von Ausführungsbeispielen näher beschrieben werden. Es zeigen:
- Fig. 1:: eine Querschnittsansicht durch eine Reinigungsvorrichtung,
- Fig. 1.1:: eine vergrößerte Ansicht der Führungsrollen auf den Führungsschienen,
- Fig. 2:: eine schematische Ansicht einer Abhebesicherung für die Riemenscheibe vom Zahnriemen,
- Fig. 3:: eine Ansicht von oben auf eine Glasfläche mit daran angebauter Reinigungsvorrichtung,
- Fig. 4:: eine Frontalansicht auf einen Reinigungsschlitten auf einem Terrassendach,
- Fig. 5:: eine Frontalansicht auf einen Reinigungsschlitten auf einem Wintergarten,
- Fig. 6:: eine Detailausführung eines Zugentlastungselements,
- Fig. 7:: eine Ansicht auf eine Detailausführung eines Zugentlastungselements in einer Draufsicht, und
- Fig. 8:: eine aus verschiedenen Teilsegmenten zusammengesetzte Bürste, die nicht Teil der Erfindung ist.

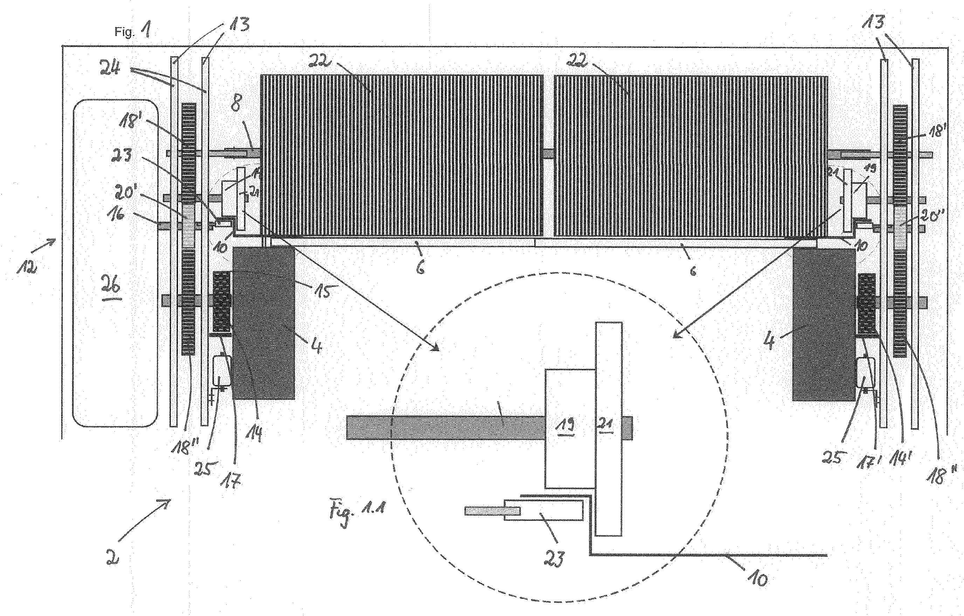

In Fig. 1 ist eine Frontalansicht auf den Reinigungsschlitten 12 einer Reinigungsvorrichtung 2 gezeigt. Der Reinigungsschlitten 12 läuft in Längsrichtung über eine Glasfläche 6, die von Trägerprofilen 4 gehalten ist. Im Reinigungsschlitten 12 ist eine Welle 8 für die Bürste 22 gehalten, die während einer Vorfahrtbewegung des Reinigungsschlittens 12 rotierend angetrieben ist. Mit der Welle 8 drehfest verbunden sind zwei erste Zahnräder 18', von denen eines mit dem Antriebsritzel 20' verbunden ist. Die Rotationsbewegung des Motors 26 wird über das Antriebsritzel 20' und das damit antriebsverbundene erste Zahnrad 18' in eine Rotationsbewegung der Bürste 22 übertragen. Die ersten und zweiten Zahnräder 18', 18" sind zwischen den Wänden eines Getriebegehäuses 13 gehalten.
Zur Fortbewegung des Reinigungsschlittens 12 über die zu reinigende Glasfläche 6 wird die Rotationsbewegung des Motors 26 außerdem auf eines von zweiten Zahnrädern 18" übertragen, das drehfest auf einer Antriebswelle montiert ist. Das vom Motor 26 angetriebene zweite Zahnrad 18" überträgt seine Drehbewegung über die Antriebswelle auf die ebenfalls drehfest mit der Antriebswelle verbundene Zahnriemenscheibe 14. Die Zahnkulisse 15 der Zahnriemenscheibe 14 kämmen mit den Zähnen des Zahnriemens 17. Über den formschlüssigen Eingriff der Zahnkulisse der Zahnriemenscheibe 14 in die Zähne des Zahnriemens 17 ist ein schlupffreier Vor- und Rücklauf der Reinigungsvorrichtung 2 über die Reinigungsstrecke hinweg möglich.
Im Ausführungsbeispiel sind die ersten Zahnräder 18' und zweiten Zahnräder 18" jeweils an beiden Endseiten der Reinigungsvorrichtung 2 als Getriebe vorhanden. Da die beiden Zahnräder 18' drehfest über die Welle 8 miteinander verbunden sind, die Rotationsbewegungen der beiden ersten und zweiten Zahnräder 18', 18" auch auf der dem Motor 26 gegenüberliegenden Seite der Reinigungsvorrichtung 2 über ein Antriebsritzel 20" in einem Getriebe miteinander synchronisiert sind und auch das zweite Zahnrad 18" auf dieser Seite drehfest mit einer Antriebswelle verbunden ist, auf die drehfest die Zahnriemenscheibe 14' aufgesetzt ist, die ihrerseits ebenfalls über die Zahnkulisse 15' mit den Zähnen des auf dieser Seite angebrachten Zahnriemens 17' kämmt, wird über diese Konstruktion ein Gleichlauf der Reinigungsvorrichtung 2 entlang den Zahnriemen 17, 17' in und entgegen der Arbeitsrichtung gewährleistet, obwohl der Antrieb nur auf einer Seite der Reinigungsvorrichtung 2 vorgesehen ist.

Zusätzlich zur konstruktiven Absicherung des Gleichlaufs der Reinigungsvorrichtung 2 in die jeweilige Bewegungsrichtung über die ersten und zweiten Zahnräder 18', 18" und die Zahnriemen 17 kann der Gleichlauf der Reinigungsvorrichtung 2 noch über weitere technische Maßnahmen unterstützt werden. Seitlich zu, oberhalb oder unterhalb von den Trägerprofilen 4 sind Führungsschienen 10 angebracht, die sich längs entlang der Bewegungsrichtung der Reinigungsvorrichtung 2 erstrecken und über die sich der Reinigungsschlitten 12 hinweg bewegt. An der Reinigungsvorrichtung 2 befinden sich zusätzliche Führungsrollen 19 mit einem Zahnkranz 21, der die Reinigungsvorrichtung 2 auf der jeweiligen Montageseite gegen einen seitlichen Versatz zur Bewegungsrichtung sperrt. Die Einbaulage der Führungsrollen 19 mit dem Zahnkranz 21 ist in Fig. 1.1 näher dargestellt. Im Ausführungsbeispiel tragen die Führungsrollen 19 einen erheblichen Anteil des Gewichts der Reinigungsvorrichtung 2. Auf den im Profilquerschnitt an die Maße angepassten Führungsschienen 10 können die Führungsrollen 19 ruhig und stossfrei laufen. Zur seitlichen Führung der Reinigungsvorrichtung 2 können zusätzlich oder alternativ noch weitere Führungsrollen 25 vorgesehen sein, die insbesondere seitlich auf einer Führungsschiene 10 und/oder einem Trägerprofil 4 abrollen.

An der Reinigungsvorrichtung 2 können noch eine oder mehrere Abhebesicherungen 23 ausgebildet sein. Die Abhebesicherungen 23 untergreifen die Führungsscheine 10 und/oder das Trägerprofil 4 und blockieren auf diese Weise mechanisch eine Abhebebewegung der Reinigungsvorrichtung 2 von den Führungsschienen 10. Durch die Abhebesicherungen 23 wird auch ein Übersetzen der Zahnkulissen 15 der Zahnriemenscheiben 14 über die Zähne der Zahnriemen 17 erschwert oder ganz verhindert.

Die Drehbewegung des motorseitigen ersten Zahnrads 18' wird über ein Antriebsritzel 20' erzeugt, das ebenfalls als Zahnrad ausgebildet ist. Das Antriebsritzel 20' ist mit einem Elektromotor 26 verbunden. Durch das Größenverhältnis zwischen dem Antriebsritzel 20 und dem Zahnrad 18 ergibt sich je nach Ausgestaltung eine Unter- oder Übersetzung der Motordrehzahl.

Der Elektromotor 26, die Welle 8, das Antriebsritzel 20', die ersten und zweiten Zahnräder 18', 18" und die Zahnriemenscheibe 14 sind vom Getriebegehäuse 13 gehalten.

In Fig. 1.1 ist eine vergrößerte Ansicht der Führung des Reinigungsschlittens 12 gezeigt.

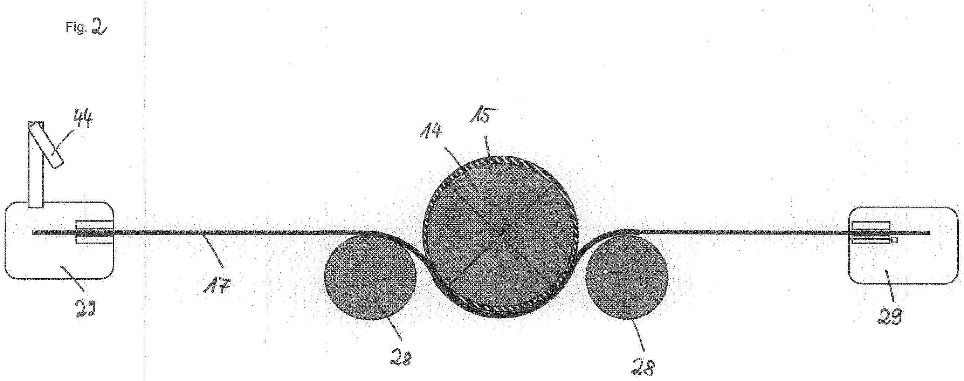

In Fig. 2 ist eine Ansicht auf die Abhebesicherung einer Zahnriemenscheibe 14 auf einem Zahnriemen 17 gezeigt. Der Zahnriemen 17 läuft zwischen einem jeweiligen Spalt zwischen dem Umfang von Laufrollen 28 und dem Umfang der Zahnriemenscheibe 14 hindurch. Die Laufrollen 28 sind so positioniert, dass sich ein größerer Umschlingungswinkel des Zahnriemens 17 um die Zahnriemenscheibe 14 ergibt, als es bei einer bloßen tangentialen Vorbeiführung des Zahnriemens 17 am Außenumfang der Zahnriemenscheibe 14 der Fall wäre. Dadurch können die Zähne des Zahnriemens 17 nicht so leicht über die Zahnkulisse 15 der Zahnriemenscheibe 14 übersetzen. Der Zahnriemen 17 ist an seinen Enden in Klemmbacken 29 gespannt gehalten, so dass sich eine sichere Längsführung ergibt. An einem Ende der Laufbahn der Reinigungsvorrichtung 2 befindet sich ein Kontaktschalter 44, über den die Wasserzufuhr an- oder ausgeschaltet werden kann.

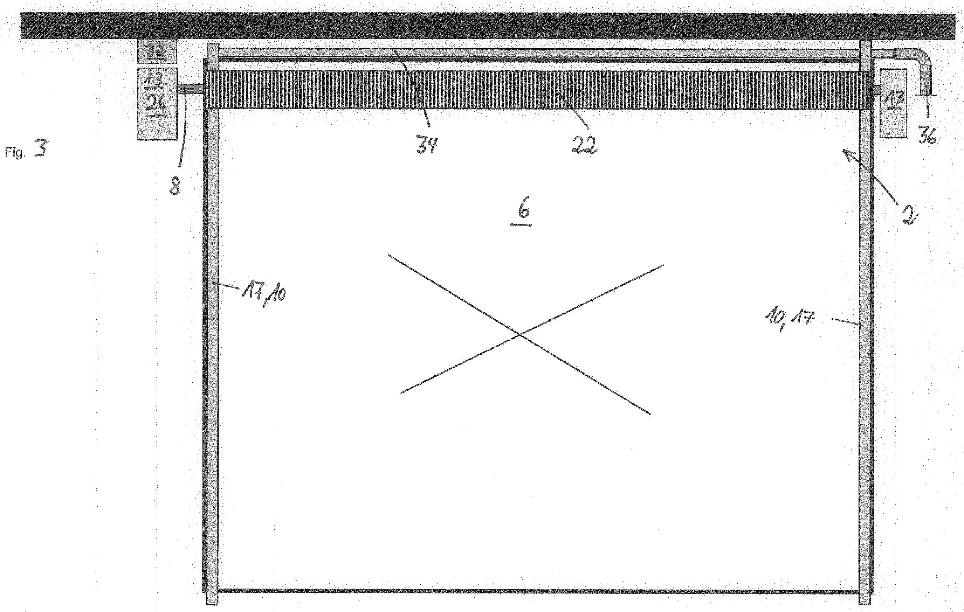

In Fig. 3 ist eine Ansicht von oben auf eine Glasfläche 6 mit einer eingebauten Reinigungsvorrichtung 2 gezeigt. In der Fig. 3 sind schematisch die Zahnriemen 17 mit den Führungsschienen 10 erkennbar. Der Reinigungsschlitten 12 befindet sich in Fig. 3 in seiner Ruhestellung nahe an einer Hauswand. Der Motor 26 befindet sich im linken Getriebegehäuse 13. An der Hauswand ist eine Kabeltrommel 32 befestigt, aus der der Elektromotor 26 bei einer Ausfahrbewegung ein Stromkabel auszieht, über das er mit elektrischem Strom versorgt ist. Die Kabeltrommel 32 kann an das normale Stromnetz des Hauses angeschlossen werden.

In der Ansicht von oben ist auch die Bewässerungsvorrichtung 34 der Reinigungsvorrichtung 2 zu sehen. Die Bewässerungsvorrichtung 34 verfügt über einen Wasseranschluss 36, über den Wasser in die zugehörigen Rohre fließt. Über Austrittsöffnungen kann das Wasser aus den Rohren auf die Glasfläche 6 gesprüht werden. In der praktischen Anwendung sollten die Austrittsöffnungen in den Rohren in die Richtung der Glasfläche 6 weisen.

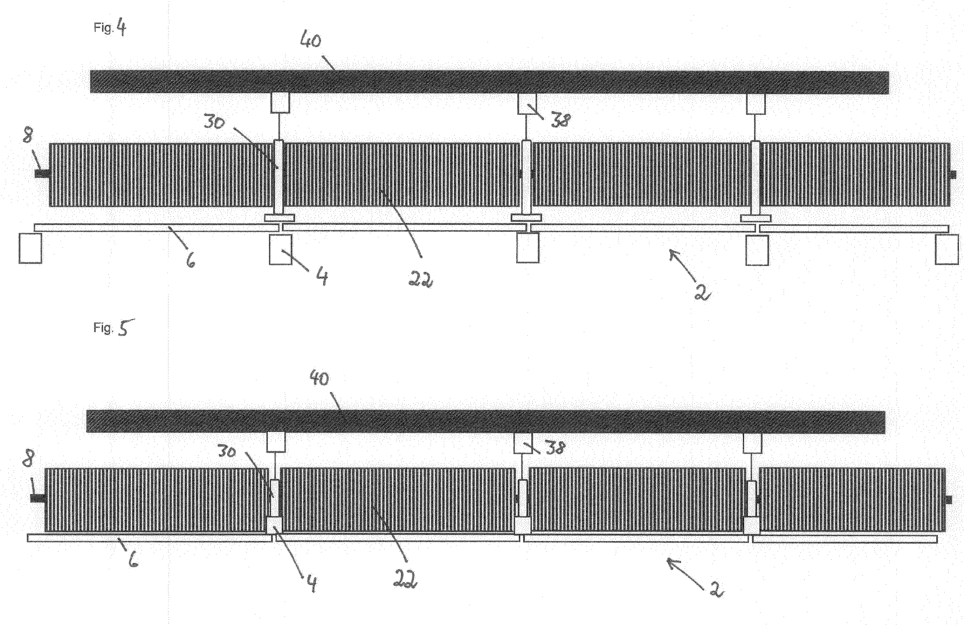

In Fig. 4 ist eine schematische Frontalansicht auf den Reinigungsschlitten 12 auf einem Terrassendach gezeigt. Zwischen den Bürsten 22 sind im Bereich der Trägerprofile 4 Zwischenrollen 30 angeordnet, über die die Welle 8 und die Bürstensegmente der Bürste 22 abgestützt sind. An der Wand 40 können Zugentlastungselemente 38 vorgesehen sein, die einen Teil des Gewichts der Reinigungsvorrichtung 2 auffangen.

Entsprechendes gilt für die in Fig. 5 gezeigte Ausführung einer Reinigungsvorrichtung 2 in einem Wintergarten.

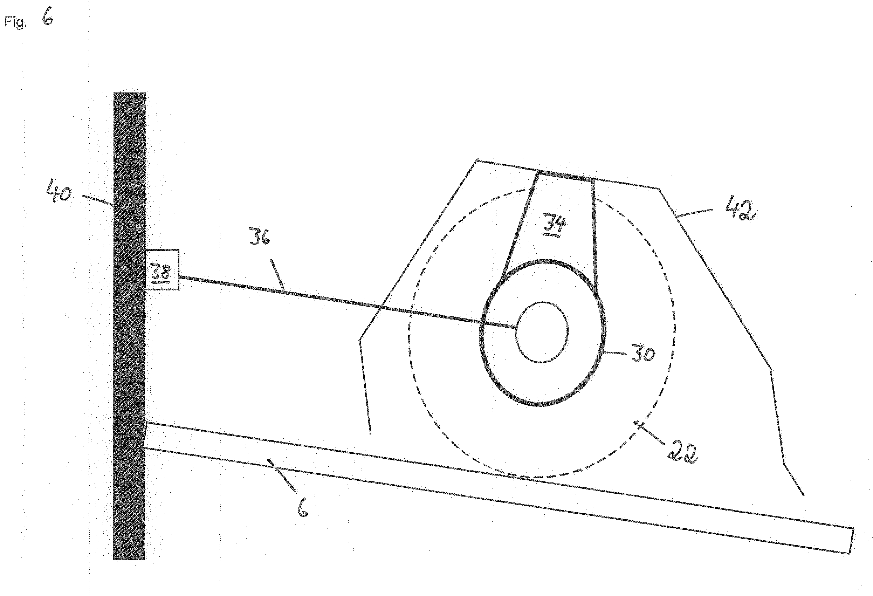

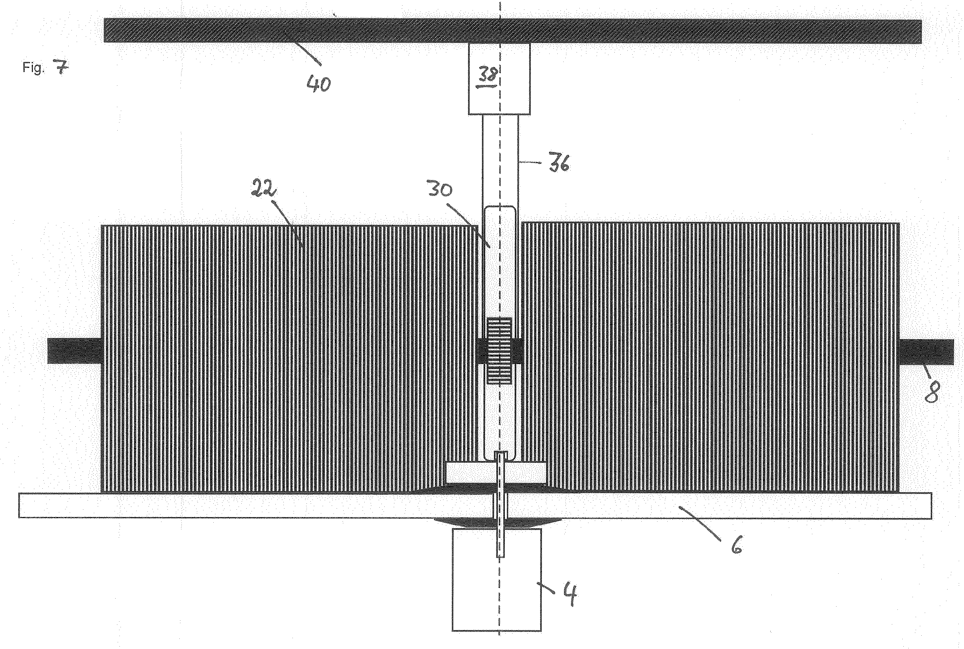

In Fig. 6 ist eine Detailausführung eines Zugentlastungselements 38 gezeigt. Das Zugentlastungselement 38 ist über ein Zugentlastungsseil 36 mit dem Reinigungsschlitten 12 verbunden. Das Zugentlastungsseil 36 ist mit einer Blechabhängung 34 verbunden, die einen Bürstenabschnitt der Bürste 22 und/oder eine Zwischenrolle 30 übergreift. Der Reinigungsschlitten 12 ist mit einer Abdeckhaube 42 abgedeckt. Die Zwischenrolle 30 kann auf einem in Fig. 6 nicht dargestellten Trägerprofil 4 abrollen. Fig. 7 zeigt die Detailausführung eines Zugentlastungselements aus Fig. 6 in einer Draufsicht.

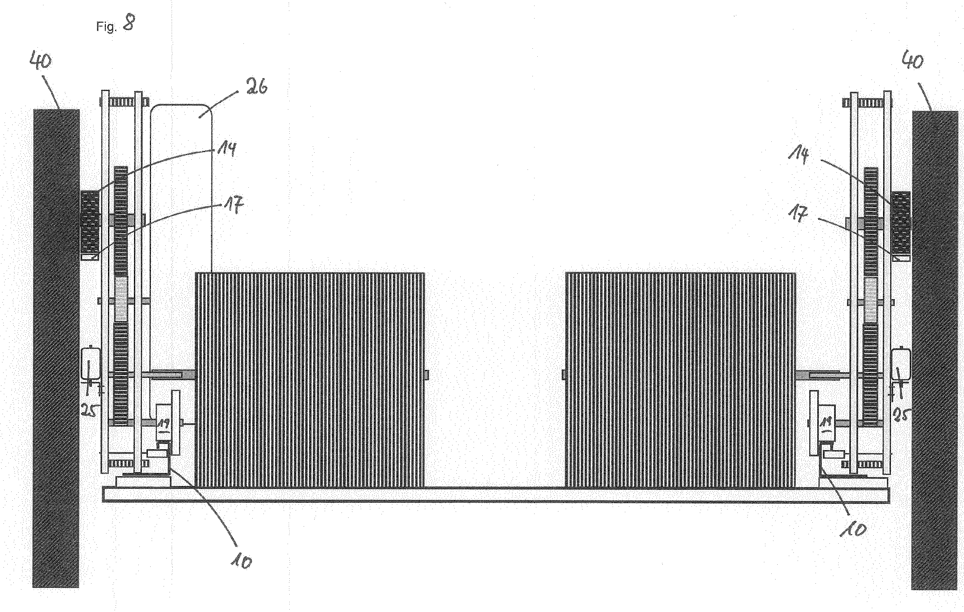

In Fig. 8 ist eine Ausführungsvariante gezeigt, die nicht Teil der Erfindung ist, bei der die Reinigungsvorrichtung 2 zwischen zwei Wänden 40 angeordnet ist. Um hier die Führungsrollen 19 mit den Führungsschienen 10, die seitlichen auf den Wandflächen abrollenden Führungsrollen 25 und die Zahnriemen 17 mit den Zahnriemenscheiben 14 sinnvoll in dem knappen Bauraum anordnen zu können, müssen hier für diese Bauteile geänderte Montagepositionen gefunden werden, die in der Ansicht in Fig. 8 gezeigt sind. Der Motor 26 ist hier in eine Position gewandert, die innerhalb der Breite des Reinigungsschlittens 12 liegt.
Die vorstehend beschriebenen Ausführungsbeispiele dienen nur der Erläuterung der Erfindung. Die Erfindung ist nicht auf die vorstehend erläuterten Ausführungsbeispiele beschränkt. Dem Fachmann bereitet es keine Schwierigkeiten, die vorstehend beschriebenen Ausführungsbeispiele auf eine, gemäß den Ansprüchen, ihm als geeignet erscheinende Weise abzuwandeln, um sie an einen konkreten Anwendungsfall anzupassen.

## Patentansprüche

1. Reinigungsvorrichtung (2) für eine Terrassenüberdachung mit einer Bewässerungsvorrichtung (34) zur Bewässerung der Glasfläche (6) der Terrassenüberdachung und einem Reinigungsschlitten (12), der motorisch angetrieben über die Glasfläche (6) bewegbar ist, wobei die Bewässerungsvorrichtung (34) stationär an einem oberen Ende der Glasfläche (6) anordenbar ist und der Reinigungsschlitten (12) mit einer motorisch rotierend antreibbaren Bürste (22) verbunden ist, deren Borsten bei einer Rotationsbewegung der Bürste (22) die Glasfläche (6) berühren können, **dadurch gekennzeichnet, dass** die Bürste (22) auf einer Welle (8) angebracht ist, auf die zwei drehfest mit der Welle (8) verbundene erste Zahnräder (18') aufgesetzt sind, die die Rotationsbewegung der Welle (8) antreiben und von denen eines mit einem von einem Motor (26) verbundenen Antriebsritzel (20') antriebsverbunden ist, und das Antriebsritzel (20') zum Verfahren des Reinigungsschlittens (12) mit einem zweiten Zahnrad (18") antriebsverbunden ist, das drehfest auf einer Antriebswelle montiert ist, die die Drehbewegung auf eine ebenfalls mit dieser Antriebswelle drehfest verbundene Zahnriemenscheibe (14) überträgt, deren Zahnkulisse (15) mit den Zähnen eines entlang des Verfahrweges vorgehaltenen Zahnriemens (17) kämmt.

2. Reinigungsvorrichtung (2) nach Anspruch 1, **dadurch gekennzeichnet, dass** die Bürste (22) in die Richtung rotierend angetrieben ist, in die sich die Glasfläche (6) absenkt.

3. Reinigungsvorrichtung (2) nach Anspruch 1 oder 2, **dadurch gekennzeichnet, dass** die Bürste (22) auf ihrer Oberseite von einem Abdeckblech (42) abgedeckt ist.

4. Reinigungsvorrichtung (2) nach einem der vorhergehenden Ansprüche, **dadurch gekennzeichnet, dass** der Reinigungsschlitten (12) in Führungsschienen (10) geführt ist, die sich auf den seitlichen Enden der Glasfläche (6) befinden kann.

5. Reinigungsvorrichtung nach Anspruch 1, **dadurch gekennzeichnet, dass** der Umschlingungsgrad der Zahnriemenscheibe (14) mit dem Zahnriemen (17) durch ein oder zwei Laufrollen (28) bestimmt ist, die so angeordnet sind, dass sie auf der der Zahnkulisse (15) abgewandten Seite des Zahnriemens (17) laufen.

6. Reinigungsvorrichtung (2) nach einem der vorhergehenden Ansprüche, **dadurch gekennzeichnet, dass** der Reinigungsschlitten (12) von einem Elektromotor (26) angetrieben ist, dessen Drehbewegung gleichzeitig über Getrieberadstufen (18, 20) den Reinigungsschlitten (12) und die Bürste (22) antreibt.

7. Reinigungsvorrichtung (2) nach Anspruch 6, **dadurch gekennzeichnet, dass** die Länge des Verfahrweges des Reinigungsschlittens (12) über die Steuerung des Elektromotors (26) einstellbar ist und/oder zumindest am unteren Ende des Verfahrweges des Reinigungsschlittens (12) ein Anschlag mit einem Schalter (44) vorhanden ist, mit dem der Antrieb für den Reinigungsschlitten (12) und/oder die Bürste (22) abschaltbar und/oder umschaltbar sind.

8. Reinigungsvorrichtung (2) nach Anspruch 7, **dadurch gekennzeichnet, dass** an die Steuerung des Elektromotors (26) oder den Schalter (44) ein schaltbares Ventil angeschlossen ist, mit dem die Wasserzufuhr der Bewässerungsvorrichtung (34) öffnenbar und/oder absperrbar ist.

9. Reinigungsvorrichtung (2) nach einem der vorhergehenden Ansprüche, **dadurch gekennzeichnet, dass** die stationär an einem oberen Ende der Glasfläche (6) angeordnete Bewässerungsvorrichtung (34) über ihre Arbeitsbreite hinweg unterschiedliche Durchmesser im Rohrdurchmesser aufweist.

10. Reinigungsvorrichtung (2) nach einem der vorhergehenden Ansprüche 6 bis 9, **dadurch gekennzeichnet, dass** an der Gebäudewand (40) eine Kabeltrommel (32) zum Aufwickeln des Stromkabels für den Elektromotor (26) anordenbar ist, die einen Rückholfederantrieb aufweist.

11. Reinigungsvorrichtung nach einem der vorhergehenden Ansprüche, **dadurch gekennzeichnet, dass** die Reinigungsvorrichtung (2) eine elektrische Steuerung aufweist, die in einem Gehäuse angeordnet ist, wobei in dem Gehäuse eine elektrisch aufheizbare Heizvorrichtung angeordnet ist.

12. Reinigungsvorrichtung (2) nach einem der vorhergehenden Ansprüche, **dadurch gekennzeichnet, dass** die Bürste (22) im Bereich von sich in Arbeitsrichtung der Reinigungsvorrichtung (2) erstreckenden Trägerprofilen (4), die über die umgebende Glasfläche (6) überstehen, einen verringerten Außenumfang aufweist.

13. Reinigungsvorrichtung (2) nach einem der vorhergehenden Ansprüche, **dadurch gekennzeichnet, dass** auf der Welle (8) ein oder mehrere Zwischenrollen (30) angeordnet sind, mit denen die Welle (8) über ihre Breite auf der Terrassenüberdachung abgestützt ist.

14. Reinigungsvorrichtung (2) nach Anspruch 6, **dadurch gekennzeichnet, dass** der Motor (26) in einer Position angeordnet ist, die innerhalb der Breite des Reinigungsschlittens (12) liegt.

## Claims

1. Cleaning device (2) for terrace roofing, comprising a sluicing device (34) for sluicing the glass surface (6) of the terrace roofing, and a cleaning carriage (12) that can be moved over the glass surface (6) in a motor-driven manner, the sluicing device (34) being able to be arranged in a stationary manner at a top end of the glass surface (6) and the cleaning carriage (12) being connected to a brush (22) that can be rotatably driven by means of a motor, the bristles of which brush can touch the glass surface (6) in the event of a rotational movement of the brush (22), **characterised in that** the brush (22) is attached to a shaft (8) on which two first gears (18') are placed which are connected to the shaft (8) for conjoint rotation and which drive the rotational movement of the shaft (8) and one of which is drivingly connected to a drive pinion (20') connected by a motor (26), and, in order to move the cleaning carriage (12), the drive pinion (20') is drivingly connected to a second gear (18") that is mounted on a drive shaft for conjoint rotation and that transfers the rotational movement to a toothed pulley (14) that is also connected to said drive shaft for conjoint rotation, the toothed link (15) of which pulley meshes with the teeth of a toothed belt (17) that is held along the movement path.

2. Cleaning device (2) according to claim 1, **characterised in that** the brush (22) is rotatably driven in the direction in which the glass surface (6) lowers.

3. Cleaning device (2) according to either claim 1 or claim 2, **characterised in that** the top of the brush (22) is covered by a cover plate (42).

4. Cleaning device (2) according to any of the preceding claims, **characterised in that** the cleaning carriage (12) is guided in guide rails (10) that may be located on the lateral ends of the glass surface (6).

5. Cleaning device according to claim 1, **characterised in that** the degree of wrap of the toothed pulley (14) with the toothed belt (17) is determined by one or two rollers (28) that are arranged so as to run on the side of the toothed belt (17) remote from the toothed link (15).

6. Cleaning device (2) according to any of the preceding claims, **characterised in that** the cleaning carriage (12) is driven by an electric motor (26), the rotational movement of which simultaneously drives the cleaning carriage (12) and the brush (22) via gearwheel stages (18, 20).

7. Cleaning device (2) according to claim 6, **characterised in that** the length of the movement path of the cleaning carriage (12) can be adjusted by the controller of the electric motor (26) and/or a stop comprising a switch (44) is provided at least at the lower end of the movement path of the cleaning carriage (12), by means of which switch the drive for the cleaning carriage (12) and/or the brush (22) can be turned off and/or reversed.

8. Cleaning device (2) according to claim 7, **characterised in that** a switchable valve is connected to the controller of the electric motor (26) or to the switch (44), by means of which valve the water supply to the sluicing device (34) can be opened and/or blocked.

9. Cleaning device (2) according to any of the preceding claims, **characterised in that** the sluicing device (34) which is arranged in a stationary manner at a top end of the glass surface (6) has a varying diameter in the pipe diameter, over the working width thereof.

10. Cleaning device (2) according to any of the preceding claims 6 to 9, **characterised in that** a cable drum (32) for winding the power cable for the electric motor (26), which drum comprises a return spring drive, can be arranged on the building wall (40).

11. Cleaning device according to any of the preceding claims, **characterised in that** the cleaning device (2) comprises an electrical controller that is arranged in a housing, an electrically heatable heating device being arranged in the housing.

12. Cleaning device (2) according to any of the preceding claims, **characterised in that** the brush (22) has a smaller outer periphery in the region of support profiles (4) that extend in the working direction of the cleaning device (2) and protrude beyond the surrounding glass surface (6).

13. Cleaning device (2) according to any of the preceding claims, **characterised in that** one or more intermediate rollers (30) are arranged on the shaft (8), which rollers support the shaft (8), over the width thereof, on the terrace roofing.

14. Cleaning device (2) according to claim 6, **characterised in that** the motor (26) is arranged in a position that is located within the width of the cleaning carriage (12).

## Revendications

1. Dispositif de nettoyage (2), destiné à un auvent de terrasse, comprenant un dispositif d'arrosage (34), destiné à arroser la surface de verre (6) de l'auvent de terrasse, et un chariot de nettoyage (12) qui peut être déplacé sur la surface de verre (6) en étant entraîné par moteur, le dispositif d'arrosage (34) pouvant être disposé de manière stationnaire à une extrémité supérieure de la surface de verre (6) et le chariot de nettoyage (12) étant raccordé à une brosse (22) qui peut être entraînée en rotation par moteur et dont les poils peuvent venir en contact avec la surface de verre (6) pendant le mouvement de rotation de la brosse (22), **caractérisé en ce que** la brosse (22) est montée sur un arbre (8) sur lequel sont placées deux premières roues dentées (18') qui sont reliées solidairement en rotation à l'arbre (8), qui entraînent le mouvement de rotation de l'arbre (8) et dont l'une est reliée en entraînement à un pignon d'entraînement (20) relié à un moteur (26) et **en ce que**, pour déplacer le chariot de nettoyage (12), le pignon d'entraînement (20') est relié en entraînement à une deuxième roue dentée (18") qui est montée solidairement en rotation sur un arbre d'entraînement qui transmet le mouvement de rotation à une la poulie de courroie dentée (14) qui est également reliée solidairement en rotation à cet arbre d'entraînement et dont la coulisse dentée (15) s'engrène avec les dents d'une courroie dentée (17) maintenue le long du trajet de déplacement.

2. Dispositif de nettoyage (2) selon la revendication 1, **caractérisé en ce que** la brosse (22) est entraînée en rotation dans le sens dans lequel la surface de verre (6) s'abaisse.

3. Dispositif de nettoyage (2) selon la revendication 1 ou 2, **caractérisé en ce que** la brosse (22) est couverte, sur sa face supérieure, d'une plaque de recouvrement (42).

4. Dispositif de nettoyage (2) selon l'une des revendications précédentes, **caractérisé en ce que** le chariot de nettoyage (12) est guidé dans des rails de guidage (10) qui peuvent être situés sur les extrémités latérales de la surface de verre (6).

5. Dispositif de nettoyage selon la revendication 1, **caractérisé en ce que** le degré d'enroulement de la poulie de courroie dentée (14) pourvue de la courroie dentée (17) est déterminée par un ou deux rouleaux (28) qui sont disposés de manière à rouler du côté de la courroie dentée (17) qui est opposé à la coulisse dentée (15).

6. Dispositif de nettoyage (2) selon l'une des revendications précédentes, **caractérisé en ce que** le chariot de nettoyage (12) est entraîné par un moteur électrique (26) dont le mouvement de rotation entraîne en même temps le chariot de nettoyage (12) et la brosse (22) par le biais d'étages de roues de transmission (18, 20).

7. Dispositif de nettoyage (2) selon la revendication 6, **caractérisé en ce que** la longueur du trajet de déplacement du chariot de nettoyage (12) peut être réglée par la commande du moteur électrique (26) et/ou une butée pourvu d'un commutateur (44) est prévu au moins à l'extrémité inférieure du trajet de déplacement du chariot de nettoyage (12), laquelle butée permet peut d'arrêter et/ou d'inverser l'entraînement du chariot de nettoyage (12) et/ou de la brosse (22).

8. Dispositif de nettoyage (2) selon la revendication 7, **caractérisé en ce qu'**une vanne commutable est raccordée à la commande du moteur électrique (26) ou au commutateur (44), laquelle vanne permet d'ouvrir ou de bloquer l'alimentation en eau du dispositif d'arrosage (34).

9. Dispositif de nettoyage (2) selon l'une des revendications précédentes, **caractérisé en ce que** le dispositif d'arrosage (34) disposée de manière stationnaire à une extrémité supérieure de la surface de verre (6) présente des diamètres de tuyau différents sur toute sa largeur de travail.

10. Dispositif de nettoyage (2) selon l'une des revendications précédentes 6 à 9, **caractérisé en ce qu'**un tambour à câble (32), qui comporte un entraînement par ressort de rappel, peut être disposé sur la paroi de bâtiment (40) pour enrouler le câble d'alimentation du moteur électrique (26).

11. Dispositif de nettoyage selon l'une des revendications précédentes, **caractérisé en ce que** le dispositif de nettoyage (2) comporte une commande électrique qui est agencée dans un boîtier, un dispositif de chauffage qui peut être chauffé électriquement étant disposé dans le boîtier.

12. Dispositif de nettoyage (2) selon l'une des revendications précédentes, **caractérisé en ce que** la brosse (22) présente une périphérie extérieure réduite dans la région de profilés de support (4) qui s'étendent dans la direction de travail du dispositif de nettoyage (2) et qui font saillie de la surface de verre environnante (6).

13. Dispositif de nettoyage (2) selon l'une des revendications précédentes, **caractérisé en ce qu'**au moins un rouleau intermédiaire (30), permettant de supporter l'arbre (8) sur toute sa largeur sur l'auvent de terrasse, est disposé sur l'arbre (8).

14. Dispositif de nettoyage (2) selon la revendication 6, **caractérisé en ce que** le moteur (26) est disposé dans une position qui se situe dans la largeur du chariot de nettoyage (12) .
